# EUROPEAN PATENT APPLICATION

(11) **EP 4 542 032 A1**
(43) Date of publication of application: **23.04.2025**
(21) Application number: 23204087.3
(22) Date of filing: 17.10.2023
(51) Int. Cl.: F03G 3/00

(54) **CABLE SYSTEM ASSEMBLY OF A GRAVITY ENERGY STORAGE SYSTEM, AND AN ADAPTER THEREOF**

(71) Applicant: Nordic Gravity Energy Storage Technology Oy, 02240 Espoo (FI)
(72) Inventor: Kattelus, Juuso, 02240 Espoo (FI)
(74) Representative: Kolster Oy Ab

(57) **Abstract**

Adapter (24) for connecting a cable system (3) to a conveyer system (11), the adapter comprising a first platform (25) arranged to be connected to the cable system, a second platform (26) arranged to be connected to the conveyer system, an adjustable connector (27), rotatably connected to the first platform and the second platform, said adjustable connector configured to lengthen and shorten based on the height of the second platform in relation to the first platform.

## Description

### FIELD OF THE INVENTION

The present invention relates to a gravity energy storage system, and more particularly to a cable system assembly and an adapter thereof.

### BACKGROUND

Traditional gravity energy storage systems rely on ascent and descent of water to store and release gravitational potential energy, which comes with high costs and land requirements for construction and operation. The existing technologies face challenges in terms of storage speed, energy consumption and flexibility.

### BRIEF DESCRIPTION

An object of the present invention is to provide a solution to alleviate at least some of the above-mentioned problems. The idea is based on an adapter for connecting a cable system and a conveyer system of a storage system, and the cable system assembly comprising such adapter, and a gravity energy storage system comprising the cable system assembly.

### BRIEF DESCRIPTION OF THE DRAWINGS

In the following the invention will be described in greater detail by means of preferred embodiments with reference to the accompanying drawings, in which
Figure 1 illustrates a gravity energy storage system according to an embodiment;
Figure 2 illustrates an exemplary storage system;
Figure 3 illustrates a simplified view of truss structure of a cable system;
Figure 4 illustrates a closer side view of the cable system according to an embodiment;
Figure 5 illustrates a top view of the cable system according to an embodiment;
Figure 6 illustrates a perspective view of the cable system according to an embodiment;
Figure 7 illustrates a side view of an end of the cable system;
Figures 8A-8C illustrate different side views of an adapter according to an embodiment;
Figure 9A illustrates a top view and Figure 9B illustrates a perspective view of adjustable connector according to an embodiment.

### DETAILED DESCRIPTION

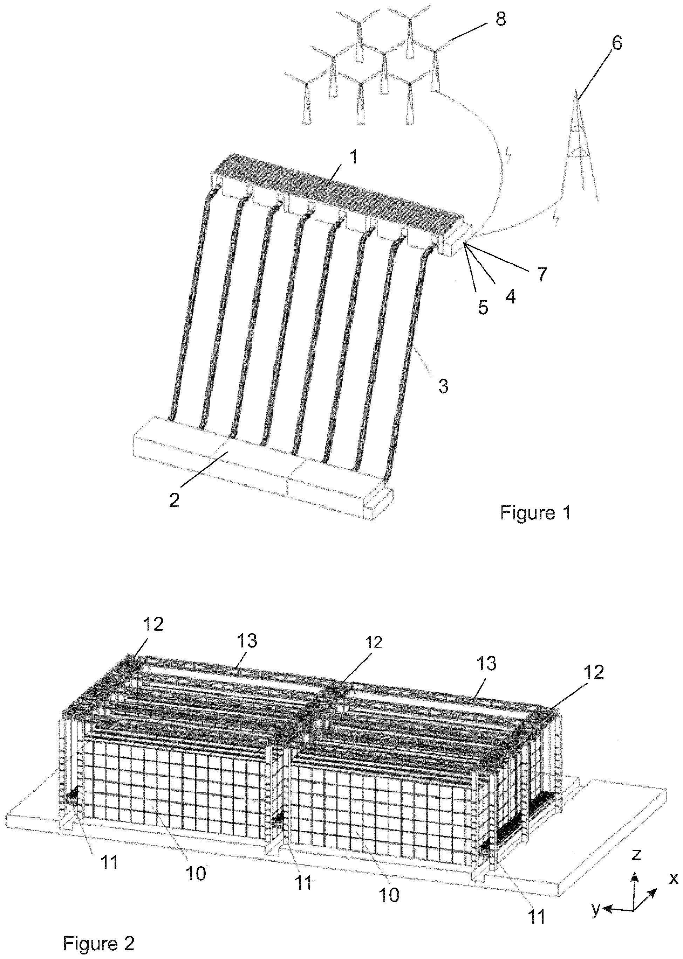

Figure 1 illustrates a gravity energy storage system according to an embodiment. The gravity energy storage comprises an upper storage site 1 at an upper elevation, a lower storage site 2 at a lower elevation, and a cable system 3 for transporting mass modules from the lower storage site 2 to the upper storage site 1 and vice versa.

The gravity energy storage system may further comprise a control unit 4 for controlling operations of all the systems, a power transmission system 5 connected to a power grid 6, and a gas compression system and storage 7 for pneumatic operations.

All configurations regarding the system may be configured in the control unit 4. The control unit 4 may control routing of energy into the power grid 6, and a control system of the energy storage system including operations of the cable system 3 and an adapter 9, which will be explained in more detail later. The power grid 6 can be interconnected networks for delivering electricity from the gravity energy storage system to the consumers, or from the electricity producers to the gravity energy system.

The gravity energy storage system may further comprise renewable energy harvesters 8, such as wind turbines or solar panels, which can produce cheap electricity which can be used to lift the mass modules from the lower storage site 2 to the upper storage site 1.

Several cable systems 3 may lead to or from the storage sites 1, 2. Each cable system 3 may co-operate with a specific conveyer system 11 inside the storage site 1, 2.

Figure 2 illustrates a storage system according to an embodiment. The storage system may be identical in both the upper storage site 1 and the lower storage site 2. The storage system may comprise multiple stacked mass modules 10 side by side, at least one conveyer system 11 arranged to horizontally move the mass modules 10 in x-direction, and a frame 12 for supporting the conveyer system 11. The storage system may further comprise beams 13 for interconnecting the frames 12 for providing better rigidity and stability to the storage system.

The storage system can be built on a concrete or stone floor. Based on the available storage space, the storage system can be easily adjusted and tailored to the efficient utilization.

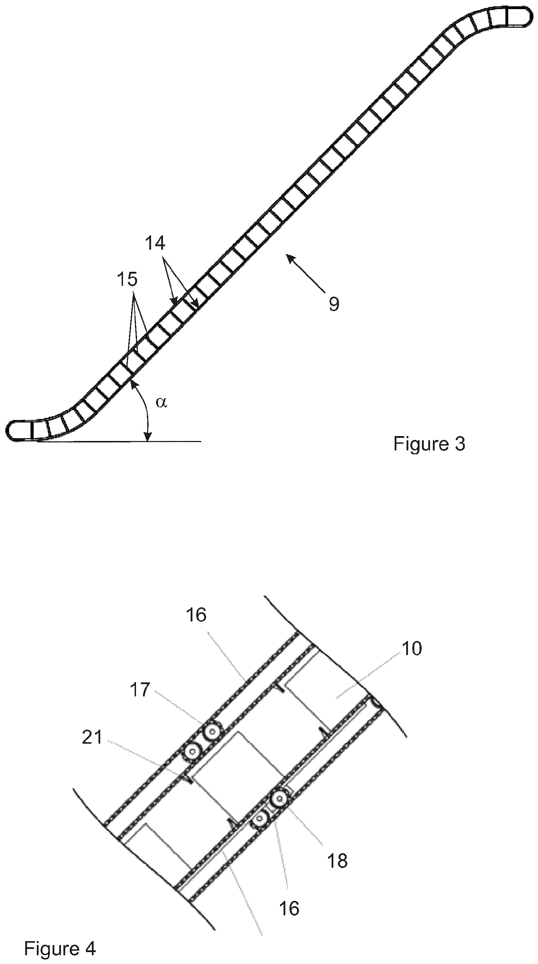

Figure 3 illustrates a simplified view of a truss structure 9 of the cable system 3 according to an embodiment. The truss structure 9 may be a rigid framework comprising four longitudinal main beams 14, arranged at a distance from each other and form a passage for mass modules 10, and multiple support rods 15. The four main beams 14 may be at corners of the truss structure 9 and each support rod 15 may be connected to two adjacent main beams 14. The truss structure 9 may be made of interconnected modular sections. The main beams 14 may be manufactured by several main beam parts and welded or fastened together depending on the desired length of the cable system 3. However, other framework design may be utilized.

The truss structure 9 has one end at a lower elevation and another end at a higher elevation, for example the lower elevation is under ground and the higher elevation is above the ground. The cable system 3 may form an inclination α in relation to a horizontal plane. The inclination α can be a 45 to 75 degrees, and especially 50 to 65 degrees.

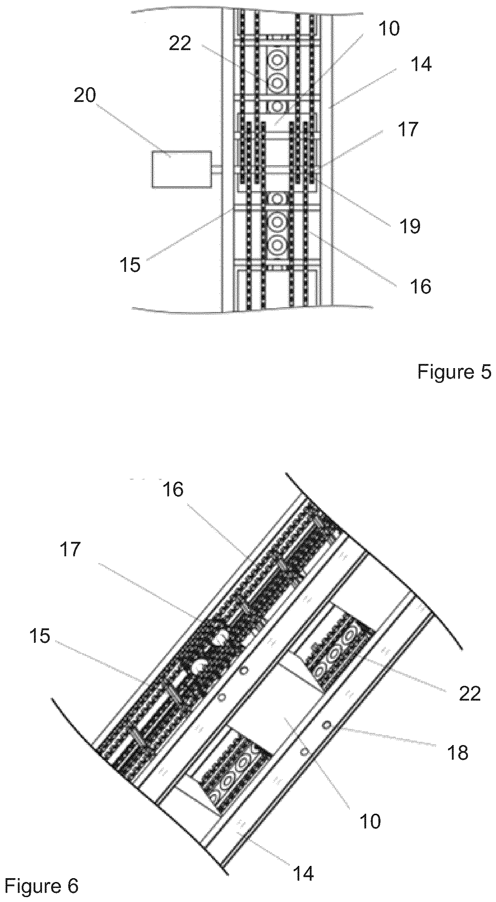

Figure 4 illustrates a closer side view of a cable system 3 transporting mass modules 10 without showing the truss structure 9, and Figure 5 illustrates a top view of the cable system 3 and Figure 6 illustrates a perspective view of the cable system 3 with the truss structure 9 according to an embodiment.

The term "mass module" may refer to any moveable mass structure that can be transported from one location to another location having a different potential energy. The mass module 10 may be shaped as a cube or cuboid with six faces. The mass module 10 may comprise an anti-slip surface texture, such as an anti-slip coating or a shell made of anti-slip material. A core of the mass module may comprise sand, gravel, stones, cement, metal, etc. suitable material having a density of equal or more than 1000 kg/m3. The shell may alternately be made of metal, or the whole mass module 10 be made of cast cement or cast iron.

The cable system 3 comprises at least two chains 16, each chain 16 may be guided between two sprockets with teeth that lock onto the chain 16. One chain 16 is located on an upper side of the cable system 3 and another chain 16 is located on a lower side of the cable system. The term "upper side" in this context refers to the part of the cable system 3 which situates above the mass modules 10, and the term "lower side" refers to the part of the cable system 3 which situates below the mass modules 10, when the mass modules 10 are being transported inside the cable system 3.

The cable system 3 further comprises a top sprocket arrangement 17 on the upper side of the cable system 3 and a bottom sprocket arrangement 18 on the lower side of the cable system 3. The top 17 and bottom sprocket arrangements 18 are arranged to lock onto the chains 16 and move the chains 16 by rotation. Each sprocket arrangement 17, 18 may comprise at least two sprockets with one chain 16 or two sprocket pairs 19 with two chains 16, as illustrated in Figure 5 and 6. The sprockets or sprocket pairs 19 are arranged at a predetermined distance from each other and to move at least one chain 16 around the predetermined distance at the cable system 3. The sprockets may rotate in clockwise to move the mass modules 10 in one direction, and in counterclockwise in the opposite direction. The sprocket pairs 19 may rotate two chains 16 simultaneously. Each sprocket pair 19 may comprise two identical sprockets co-axially connected to each other and co-rotatable. However, in some embodiments the sprocket arrangement 17, 18 may comprise more than two sprockets or two sprocket pairs 19, such as three or four sprockets, or two sprocket triplets or two sprocket quadruples, or any combination thereof.

In the embodiment illustrated in Figures 5 and 6, the sprocket arrangement 17, 18 may comprise four sprocket pairs 19 and four chains 16 in such a way that two sprocket pairs 19 are arranged in one transverse position and another two sprocket pairs 19 are arranged in another transverse position at the predetermined distance away. Additional two sprocket pairs 19 and chains 16 may offer more stable transportation of the mass modules 10, wherein the load is move evenly divided among the sprocket arrangement 17, 18.

Each sprocket arrangement 17, 18 may further comprise a motor-generator unit 20 having a shaft coupled to the center of one sprocket pair 19, or two sprocket pairs 19 as illustrated in Figure 5. The motor-generator unit 20 may comprise an electric generator driven by an electric motor. The electric generator supplies electricity to the power grid 6 when the mass modules 10 are moved from the upper storage site 1 to the lower storage site 2, transforming the stored gravitational potential energy to electricity. When the mass modules 10 are moved from the lower storage site 2 to the upper storage site 1, the power grid 6 supplies the electricity to the electric motor, transforming the electricity to stored gravitational potential energy.

The cable system assembly may further comprise a plurality of top sprocket arrangements 17 and a plurality of bottom sprocket arrangements 18, arranged all the way between the two ends of the cable system 3. The plurality of sprocket arrangements may be interlinked in such a way that between the two longitudinal sprocket pairs 19 of a first top sprocket arrangement 17, situates a sprocket pair 19 of a second top sprocket arrangement 17. Preferably, the sprocket pair 19 of the first top sprocket arrangement and the sprocket pair 19 of the second sprocket arrangement are longitudinally next to each other but without obstructing movement of the chains 16, as illustrated in Figure 5. Same may apply to the plurality of bottom sprocket arrangements 18.

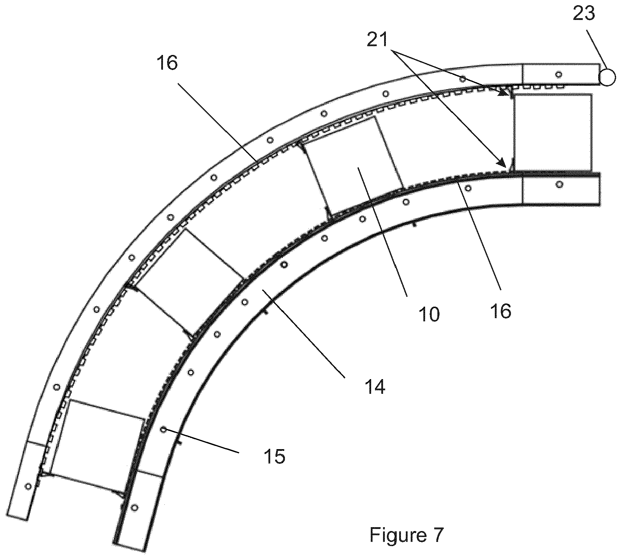

In the straight portion of the truss structure 9, each sprocket pair 19 may be identical so that one 360 degree rotation of the sprocket pair 19 moves the same distance of the chains 16 of each sprocket arrangement 17, 18. However, as illustrated in Figure 7, in the end portions of the truss structure 9 with curved sections, one of the top sprocket arrangement 17 or bottom sprocket arrangement 18 may have bigger sprocket pairs with increased diameter so that opposite faces of the mass module 10 move with the same rotational curve.

The cable system 3 may further comprise support plates 21 for facilitating the mass module 10 to transport up or down at a same speed with the chains 16 without sliding off the chains 16. The support plates 21 may be arranged on each chain 16 in predetermined intervals in such a way that the support plates 21 are at the same transverse plane and contacting and supporting one face of the mass module 10 during the ascend or descend of the mass module 10. The support plate 21 can be arranged on the outer perimeter of the chain 16 so that they are not obstructing the rotation of the sprocket pairs 19. Each chain 16 may comprise a plurality of support plates 21. The proximal edges of the support plates 21 may be arranged in such a way that the distance between the support plate 21 of the top sprocket arrangement 17 and the support plate 21 of the bottom sprocket arrangement 18 is smaller than the edge of the mass module 10.

The cable system 3 may further comprise at least one support track 22 at the bottom section of the truss structure 9 for supporting the weight of the mass modules 10 during the transportation. The support track 22 may comprise support beams arranged between and parallel to the main beams 14 and supported by the transverse support rods 15. The top surface of the support track 22 may be at the same plane as the outer perimeter of the chains 16 between the sprocket pairs 19 towards the mass modules 10. The support track 22 may comprise air holes for pressurized air which may reduce friction between the mass module 10 and the support track 22. Alternatively, or additionally, the support track 22 may comprise freely rotatable rollers (not shown) arranged between the support beams to further reduce friction between the mass module 10 and the support track 22. The term "freely rotatable roller" in this context refers to rollers with possible bearings and which are not operable by a motor or an actuator.

The cable system 3 may further comprise at least one sensor 23 for detecting positions of the mass modules 10. The sensor 23 may be arranged near the end of the truss structure 9, or both ends, and/or anywhere between the main beams 14. The sensor 23 may be for example, potentiometer, position encoder, laser Doppler vibrometer, proximity sensor, or ultrasonic sensor. In some embodiments, the sensor 23 may be a camera configured to transmit visual images of the mass modules 10 to the control unit 4.

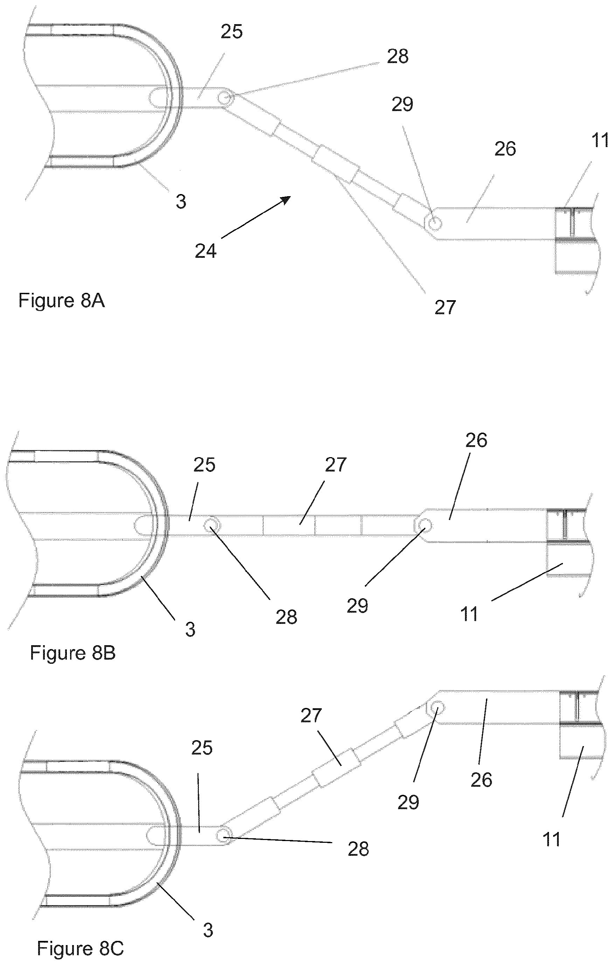

The cable system assembly further comprises an adapter 24 for connecting the cable system 3 to the conveyer system 11. Figures 8A-8C illustrate different side views of the adapter 24 according to an embodiment.

The adapter 24 comprises a first platform 25 connected to the cable system 3. The first platform 25 may be rigidly coupled to the truss structure 9 of the cable system 3, for example, or to the end of the support track 22. The first platform 25 is arranged to receive the mass module 10 after the mass module 10 exits from the cable system 3 and separates from the last chains 16.

The adapter 24 further comprises a second platform 26 connected to the conveyer system 11. The second platform 26 may be rigidly coupled to, for example, a rack or fixed platform of the conveyer system 11. The second platform 26 is arranged to transport the mass module 10 evenly to the same elevation as the conveyer system 11.

The conveyer system 11 may be vertically movable so that the mass modules 10 can be stacked on top of each other in the storage system. The frame 12 may comprise vertical pillars and a horizontal girder supported by the pillars. The conveyer system 11 may be arranged between the pillars in such a way that at least two pillars are arranged on one longitudinal side of the conveyer system 11, and at least two pillars are arranged on the other longitudinal side of the conveyer system 11. The pillars and the girder may define the area of vertical movement of the conveyer system 11. The number of the pillars is preferably 4, 6, 8, etc. even number. At least one hoist may be attached to the frame 12, the hoist is arranged to vertically move the whole conveyor system 11.

The adapter 24 further comprises an adjustable connector 27 which is configured to lengthen and shorten based on the height of the second platform 26, which based on the height of the conveyer system 11, in relation to the first platform 25. The adjustable connector 27 is rotatably connected to the first platform 25 and also rotatably connected to the second platform 26 in such a way that when the first platform 25 and the second platform are in different height (such as Figure 8A and 8C), the adjustable connector 27 is in an extended configuration. When the first platform 25 and the second platform 26 are in a same height (such as Figure 8B), the adjustable connector 27 is in a contracted configuration.

The adapter 24 may further comprise a first rotatable shaft 28, coupling the first platform 25 to the adjustable connector 27, and a second rotatable shaft 29, coupling the second platform 26 to the adjustable connector 27. The first rotatable shaft 28 and the second rotatable shaft 29 may be identical to each other. The first rotatable shaft 28 and the second rotatable shaft 29 provide a pivot point for the adjustable connector 27 to rotate about the pivot point in relation to the first platform 25 and the second platform 26, respectively.

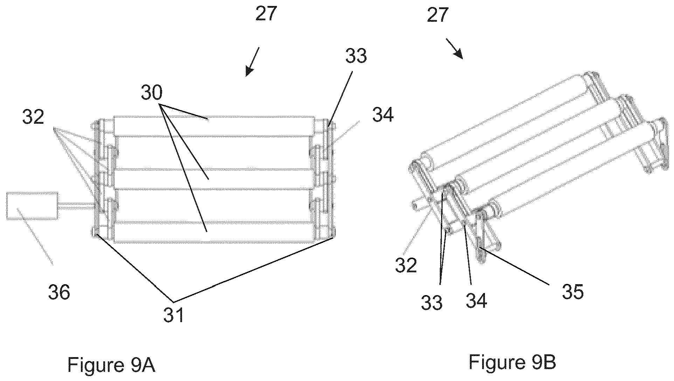

Figure 9A illustrates a top view and Figure 9B illustrates a perspective view of the adjustable connector 27 according to an embodiment. In this embodiment, the adjustable connector 27 may comprise a plurality of rollers 30 arranged parallel and at an interval from each other. The rollers 30 may have a length longer than the edge of the mass module 10. The width of the interval is arranged to be adjustable. The adjustable connector 27 may comprise a scissors mechanism 31, which comprises scissor arms 32, hinge pins 33 located at an end of the scissor arms 32, and axle pin 34 located at a middle of the scissor arms 32. Both ends of the rollers 30 may be coupled to the hinge pins 33 of the scissors mechanism 31 so that when the scissor mechanism 31 is extended, the rollers 30 are further away from each other and the intervals are wider. When the scissors mechanism 31 is contracted, the rollers 30 are closer to each other and the intervals are narrower.

The adjustable connector 27 may further comprise a hydraulic cylinder 35 for moving the scissors mechanism 31. The hydraulic cylinder 35 may be attached to an upper and lower hinge pins 33 of at least one scissor mechanism 31. By bringing the hinge pins 33 closer to each other, the adjustable connector 27 moves the extended configuration. By bringing the hinge pins 33 farther from each other, the adjustable connector 27 moves to the contracted configuration. However, in some embodiments, there is no need for additional means for controlling the adjustable connector 27. The adapter 24 may be rigidly coupled to the conveyer system 11 so when the conveyer system 11 moves up or down, the adjustable connector 27 automatically moves with it and adjusts its length accordingly, as is shown in Figures 8A-8C.

The adjustable connector 27 may alternatively comprise telescopic arms, such as illustrated in Figures 8A-8C, instead of the scissors mechanism. The telescopic arm may comprise of two or more arm sections with at least two layers that allow the adapter 24 to lengthen and shorten by sliding between the layers. In Figures 8A-8C five arm sections are illustrated, wherein three outer layers and two inner layers are provided. During the shortening of the adapter 24, the inner layers slide further inside the outer layers, and during the lengthening of the adapter 24, the inner layers slide further out from the outer layers. The rollers 30 may be attached to the outer layers of the telescopic arm.

The adapter 24 may further comprise a motor 36, arranged to rotate the rollers 30 of the adjustable connector 27. The adjustable connector 27 may further comprise belts at the end of the rollers 30, which are connected to the motor 36 so that one motor 36 may rotate every roller 30 of the adjustable connector 27. However, in some embodiments, the motor 36 may rotate every other roller 30 while the remaining rollers 30 may be freely rotatable.

The present gravity energy storage technology elevation when electricity is cheaper, and moving the mass modules from the higher elevation to the lower elevation when electricity is more expensive. Energy is stored when the mass is lifted to an upper storage site, and energy is produced when the mass is lowered to a lower storage site.

The present cable system can increase the transportation speed and reduce energy consumption, as well as exhibit improved efficiency and functionality of the gravity energy storage. The adapter of the cable system assembly can be used to accurately control the height position of the mass modules according to the input target height of the conveyer system. This ensures the accurate position of the mass modules during the stacking process and prevents position errors during stacking. The adjustable connector enables the adapter to be extended or retracted as needed, optimizing the use of available space, and accommodating varying storage requirements.

The cable system assembly of the present invention ensures stability and structural integrity, enabling safe and secure positioning of the mass modules along the cable system, and from the cable system to the conveyer system. The design of the structure minimizes energy dissipation and enhances overall efficiency of the gravity energy storage system.

The design of the present gravity energy storage system requires less space, shorter construction period, long service life and is environmentally friendly. It can effectively utilize existing resources, such as abandoned mines, to serve solar and wind energy applications and as well as power productions.

The present invention enables efficient storage and release of gravitational energy with minimal energy loss. It can respond quickly to electricity demands, achieve rapid charging and discharging, and possess flexible energy scheduling capabilities. It will provide the energy industry with a reliable and economically efficient energy storage solution, promote sustainable development of renewable energy, and ensure the stability of power systems.

It will be obvious to a person skilled in the art that, as the technology advances, the inventive concept can be implemented in various ways. The invention and its embodiments are not limited to the examples described above but may vary within the scope of the claims.
1 upper storage site
2 lower storage site
3 cable system
4 control unit
5 power transmission system
6 power grid
7 gas compression system and storage
8 renewable energy harvester
9 truss structure
10 mass module
11 conveyer system
12 frame
13 beam
14 main beam
15 support rod
16 chain
17 top sprocket arrangement
18 bottom sprocket arrangement
19 sprocket pair
20 motor-generator unit
21 support plate
22 support track
23 sensor
24 adapter
25 first platform
26 second platform
27 adjustable connector
28 first rotatable shaft
29 second rotatable shaft
30 rollers
31 scissor mechanism
32 scissor arm
33 hinge pin
34 axle pin
35 hydraulic cylinder
36 motor

## Claims

1. An adapter for connecting a cable system to a conveyer system of a gravity energy storage, the adapter comprising
a first platform arranged to be connected to the cable system,
a second platform arranged to be connected to the conveyer system,
an adjustable connector, rotatably connected to the first platform and the second platform, said adjustable connector configured to lengthen and shorten based on the height of the second platform in relation to the first platform.

2. The adapter according to claim 1, wherein the adjustable connector comprises a plurality of rollers arranged at an interval from each other, the width of the interval arranged to be adjustable.

3. The adapter according to claim 2, wherein the adjustable connector comprises a scissors mechanism, the scissors mechanism comprising scissor arms, hinge pins located at an end of the scissor arms, and axle pin located at a middle of the scissor arms.

4. The adapter according to claim 3, wherein both ends of the rollers are coupled to the hinge pins of the scissors mechanism.

5. The adapter according to any one of claims 2-4, wherein the adapter further comprises a motor, arranged to rotate the rollers.

6. The adapter according to any one of claims 1-5, wherein the adapter further comprises a hydraulic cylinder for moving the adjustable connector.

7. The adapter according to any one of claims 1-6, wherein the adapter further comprises a first rotatable shaft, coupling the first platform to the adjustable connector, and a second rotatable shaft, coupling the second platform to the adjustable connector.

8. A cable system assembly for transporting mass modules from lower elevation to higher elevation or vice versa, the cable system assembly comprises:
a cable system comprising:
a truss structure having one end at a lower elevation and another end at a higher elevation,
at least two chains, one arranged on upper side and another on lower side of the truss structure,
a top sprocket arrangement and a bottom sprocket arrangement, arranged to lock onto the chains and move the chains by rotation,
a motor generator unit connected to each sprocket arrangement,
and the assembly further comprises the adapter according to any one of claims 1-7 coupled to one or both ends of the truss structure.

9. The cable system assembly according to claim 8, wherein the cable system forms a 45-75 degrees inclination in relation to a horizontal plane.

10. The cable system assembly according to claim 8 or 9, wherein each sprocket arrangement comprises at least two sprocket pairs, arranged to move at least two chains around a predetermined distance at the cable system.

11. The cable system assembly according to any one of claims 8-10, wherein the assembly further comprises support plates, arranged on the chain, for enabling the mass module to transport up or down at a same speed with the chains.

12. The cable system assembly according to any one of claims 8-11, wherein the assembly further comprises a support track at a bottom section of the truss structure for supporting the weight of the mass modules.

13. The cable system assembly according to claim 12, wherein the support track comprises freely rotatable rollers.

14. The cable system assembly according to any one of claims 8-13, wherein the assembly further a sensor for sensing positions of the mass modules.

15. A gravity energy storage system, said system comprising
a lower storage site at a lower elevation,
an upper storage site at a higher elevation,
a cable system assembly according to any one of the claims 8-14,
a control unit for controlling operations of the system,
a power transmission system connected to a power grid.
